Europäisches Patentamt

European Patent Office

Office européen des brevets

(19)

(11) Numéro de publication: **0 234 965**
**B1**

(12) # FASCICULE DE BREVET EUROPEEN

(45) Date de publication du fascicule du brevet:
**18.07.90**

(51) Int. Cl.⁵: **G01B 5/28,** G01N 19/02

(21) Numéro de dépôt: **87400042.5**

(22) Date de dépôt: **12.01.87**

(54) **Dispositif de contrôle de l'état de surface de matériaux.**

(30) Priorité: **13.01.86 FR 8600470**

(43) Date de publication de la demande:
**02.09.87 Bulletin 87/36**

(45) Mention de la délivrance du brevet:
· **18.07.90 Bulletin 90/29**

(84) Etats contractants désignés:
**AT BE CH DE ES GB IT LI NL SE**

(56) Documents cités:
**DE-A- 2 535 912
DE-A- 2 627 239
DE-A- 2 947 529
FR-A- 1 460 033
US-A- 3 017 618
US-A- 3 935 468
US-A- 4 051 713**

(73) Titulaire: **Antoine, Antoine, F-08370 La Ferté sur Chiers(FR)**

(72) Inventeur: **Antoine, Antoine, F-08370 La Ferté sur Chiers(FR)**

(74) Mandataire: **Gérardin, Robert Jean René, PROT'INNOV INTERNATIONAL SA Résidence de l'Observatoire avenue Georges Clémenceau Boîte Postale 2764, F-51066 Reims Cédex(FR)**

## Description

L'invention concerne un dispositif de contrôle de l'état de surface de matériaux et son procédé de mise en œuvre.

Certains matériaux doivent, lors de leur transformation ultérieure, être revêtu d'une couche d'un autre matériau assurant leur protection, modifiant leur aspect ou permettant leur assemblage ultérieur avec des matériaux de même nature ou de nature différente. Toutefois, la solidité de l'accrochage de cette couche est essentiellement fonction de l'état de surface des matériaux à revêtir. Il est fréquent que cet état de surface ne corresponde pas à celui exigé pour l'obtention d'un accrochage de bonne qualité et qu'un traitement intermédiaire particulier soit nécessaire.

Il existe une gamme assez étendue de traitements de surface mécaniques, chimiques, thermiques, électroniques ou radiologiques, toutefois, les moyens de contrôle de leur efficacité sont restés jusqu'alors assez empiriques, discontinus et destructifs. Ils exigent tous, en effet, le prélèvement d'échantillons du matériau.

Il est impossible, avec de tels moyens, d'assurer le contrôle automatique et continu d'un traitement de surface pendant son application.

Cette situation se traduit par des rebuts non négligeables, quelle que soit la périodicité des contrôles et le soin apporté à ceux-ci, et par l'intervention fréquente de personnel qualifié.

On connaît déjà un dispositif de contrôle de l'état de surface de matériau, décrit dans le brevet Allemand DE-A 2 535 912, lequel a pour objet un appareil de contrôle de rugosité, constitué essentiellement de la transposition, dans le domaine de la mécanique, d'un dispositif bien connu dans celui de la retransmission de l'enregistrement de signaux sonores, par l'intermédiaire de rugosités imprimées dans le fond des sillons de disques, et qui consiste à traduire ces rugosités en variation d'un signal électrique qui est, dans ce cas, transformé en tracé sur un écran cathodique ou sur un enregistreur.

Cet appareil de contrôle comprend un bras rigide, muni d'une aiguille, relié à un support par l'intermédiaire d'une articulation souple, qui retransmet à un levier rigide, par l'intermédiaire d'une biellette, les variations d'amplitude des rugosités existantes sur la pièce métallique à contrôler. Ce levier actionne un dispositif connu, constitué, par exemple, d'un solénoïde soumis à une variation de flux consécutive à la variation de position d'un noyau magnétique, solidaire dudit levier, ou autres moyens du genre. La fidélité de la retransmission des rugosités sur le récepteur exige, en particulier, qu'une bonne rigidité soit donnée tant au bras qu'au levier et que la pointe de l'aiguille soit suffisamment fine; ce qui limite l'emploi de l'appareil à des matériaux durs.

On connaît déjà un dispositif de contrôle de l'état de surface d'une route, correspondant au préambule de la revendication 1 (brevet de la République Fédérale d'Allemagne DE-A 2 947 259). L'état de surface d'une route et notamment son coefficient d'adhérence par rapport aux pneumatiques d'un véhicule par l'intermédiaire d'un capteur mesurant les efforts de traction ou de compression exercées sur la barre de liaison des roues directrices du véhicule montées avec un certain pincement l'une par rapport à l'autre. Un tel dispositif n'est destiné qu'à prévenir le conducteur du véhicule d'une diminution défavorable du coefficient d'adhérence d'une route sous l'effet de la pluie ou du gel; il ne s'agit donc pas d'un moyen de contrôle suffisamment précis pour permettre, par exemple, le pilotage direct d'une installation de traitement de surface n'affectant que faiblement le coefficient d'adhérence d'un matériau.

La présente invention a pour but de remédier à ces inconvénients. L'invention, telle qu'elle est caractérisée dans les revendications, résout le problème consistant à créer un dispositif permettant la mesure relative, continue ou discontinue, de l'état de surface de matériaux, directement sur ceux-ci, sans prélèvement d'échantillon. Ceci est obtenu par l'intermédiaire d'un dispositif constitué d'un capteur de mesure d'adhérence dont l'élément sensible est mis en contact avec la surface du matériau dont l'état de surface est à contrôler, en déplacement relatif par rapport à celle-ci, et d'un calculateur associé assurant la mesure comparative, l'affichage et le pilotage éventuel de l'appareil de traitement de surface.

Les avantages obtenus grâce à cette invention, consistent essentiellement en ce que l'état de surface est déterminé séquentiellement, directement sur les matériaux en défilement, ou en déplaçant le capteur par rapport à ceux-ci, et en ce que le résultat du contrôle est utilisé directement pour piloter l'installation de traitement de surface.

L'invention est exposée ci-après plus en détail, à l'aide de dessins représentant un dispositif de contrôle d'une installation de traitement de surface, par effet CORONA, de bandes de matières plastiques produites à grande vitesse (60 à 120 mètres/minute) donné à titre d'exemple:

– La figure 1, représente une vue de face du capteur

– La figure 2, représente une vue de côté du capteur

Les figures représentent un capteur de mesure d'adhérence dont l'élément sensible est constitué essentiellement de roues 1 et 2, montées sur paliers fluides 3 et prenant appui sur le matériau 4, d'un dispositif 5 de mesure de vitesse de rotation de la roue 1 et d'un dispositif 6 de freinage et de mesure de la vitesse de rotation de la roue 2.

Conformément à la présente invention, un calculateur associé, fournissant entre autre l'énergie active aux capteurs, affiche les résultats de la mesure et, au besoin, mémorise ou imprime les résultats. En cas de défaut, il peut actionner une alarme et intervenir sur l'installation, de production ou de traitement pour faire effectuer les corrections correspondantes.

Pour le traitement CORONA de films plastiques, pris comme exemple d'application, le dispositif peut piloter le générateur en fonction de la mesure.

Ce calculateur possède également un registre, ou une programmation permettant l'étalonnage de la mesure par rapport à d'autres mesures conventionnelles. Ainsi, l'état de surface de la matière est analysé de façon conventionnelle en utilisant les méthodes existantes, puis le calculateur, par l'intermédiaire de son capteur, analyse, à son tour, cette surface, lors de son premier cycle, et enregistre cette mesure comme valeur de référence pour les mesures suivantes. Il s'agit donc, dans ce cas, d'une mesure corm, parative et relative.

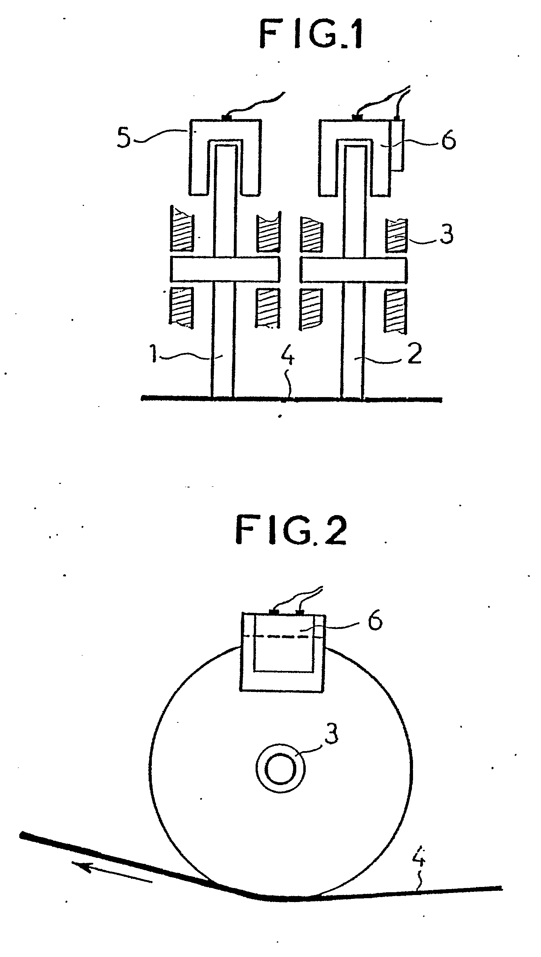

Ces mesures s'effectuent par l'iritermédiaire du capteur, actif et non destructif, représenté sur les figures 1 et 2 des dessins annexés.

L'élément sensible du capteur comporte deux roues indépendantes 1 et 2, montées sur palier fluide 3 et en appui roulant sur le matériau 4 dont l'état de surface est à contrôler. Ces deux roues, 1 et 2, dont la vitesse de rotation et l'effort de freinage sont mesurés et transmis au calculateur associé, sont strictement identiques, en dimensions, en masse et en état de surface de leur bande de roulement. Le contrôle de l'état de surface s'effectue à partir de la mesure différentielle de la vitesse de rotation des roues 1 et 2, pour un couple de freinage déterminé. Des dispositifs 5 et 6 permettent d'effectuer cette mesure différentielle de la vitesse de rotation des roues 1 et 2, pour un couple de freinage déterminé obtenu par l'intermédiaire d'un moyen combiné au dispositif 6 de mesure de vitesse de rotation de la roue 2. Le freinage de l'une des roues 2, est obtenu par l'intermédiaire d'un système réglable permettant le contrôle du couple appliqué en utilisant, par exemple, les courants de Foucault.

Au moment du dérapage de la roue 2 freinée et de la mesure différentielle des vitesses correspondantes, le freinage est annulé, de façon à ramener les deux roues 1 et 2 à la même vitesse, puis rétabli et progressivement augmenté, jusqu'à obtention d'un nouveau dérapage, afin d'obtenir ainsi un contrôle séquentiel continu de l'état de surface.

Ainsi, la roue 1 est entièrement libre, alors que la roue 2 est freinée progressivement avec transmission instantanée, au calculateur, de la valeur du couple de freinage correspondant. A un certain moment, le freinage progressif provoque le dérapage de la roue 2, sur la surface du matériau 4 en défilement; il se produit alors un décalage entre les vitesses de rotation des roues 1 et 2. La lecture du couple de freinage, exercé à ce moment par le frein, fournit la valeur relative de l'adhérence et, par conséquent, de l'état de surface. A ce moment, la roue 2 est libérée jusqu'à la prochaine mesure.

Le principe de la mesure consiste donc à faire la mesure différentielle de la vitesse de rotation des roues 1 et 2, et du couple de freinage appliqué à la roue 2. Du fait de ce freinage, la roue 2 dépasse sa limite d'adhérence et acquiert ainsi, par glissement, une vitesse de rotation différente de celle de la roue 1. Cette différence, reflète, pour une valeur déterminée de l'état de surface de la bande de roulement des roues 1 et 2 et du couple de freinage, l'état de surface du matériau. Cette valeur est transmise au calculateur associé et le freinage est alors annulé, de façon que la roue 2 puisse reprendre sa vitesse normale.

## Revendications

1. Dispositif de contrôle de l'état de surface de matériaux, constitué essentiellement d'un capteur de mesure d'adhérence, dont l'élément sensible est mis en contact avec la surface du matériau, en déplacement relatif par rapport à celle-ci, et d'un calculateur associé assurant la mesure comparative, l'affichage et le pilotage éventuel de l'appareil de production ou de traitement de surface caractérisé en ce que l'élément sensible du capteur de mesure d'adhérence est constitué de deux roues indépendantes (1 et 2) dont les bandes de roulement ont le même état de surface, dont l'une (1) est libre et dont l'autre (2) est munie d'un frein à action progressive, et dont la vitesse de rotation et l'effort de freinage sont mesurés et transmis au calculateur associé.

2. Dispositif selon la revendication 1, caractérisé en ce que les roues indépendantes sont montées sur paliers fluides (3).

3. Dispositif selon la revendication 1, caractérisé en ce que le freinage de l'une des roues (2) est obtenu par un moyen réglable permettant le contrôle du couple par courant de Foucault.

4. Méthode de mise en œuvre du dispositif selon la revendication 1, caractérisée en ce que le contrôle de l'état de surface s'effectue à partir de la mesure différentielle, de la vitesse de rotation des roues (1 et 2), pour un couple en freinage déterminé.

5. Méthode selon la revendication 4, caractérisée en ce que, au moment du dérapage de la roue freinée (2) et de la mesure différentielle des vitesses correspondantes, le freinage est annulé, de façon à ramener les deux roues (1 et 2) à la même vitesse, puis progressivement rétabli et augmenté, jusqu'à obtention d'un nouveau dérapage.

## Patentansprüche

1. Vorrichtung zur Ermittlung der Oberflächenbeschaffenheit von Materialien, bestehend im wesentlichen aus einem Sensor zum Messen des Reibungswiderstandes, dessen Fühlerelement mit der Oberfläche des Materials in Kontakt gebracht und dabei relativ zu dieser verschoben wird, und aus einem verbundenen Rechner, der die Vergleichsmessung, die Datenanzeige und gegebenenfalls die Steuerung des Produktions- und Oberflächenbehandlungsgerätes gewährleistet, dadurch gekennzeichnet, daß das Fühlerelement des Sensors zum Messen des Reibungswiderstandes aus zwei unabhängigen Rädern (1 und 2) besteht, deren Lauffläche die gleiche Oberflächenbeschaffenheit aufweist, und von denen das eine (1) frei läuft und das andere (2) mit einer zunehmend wirkenden Bremse ausgestattet ist, und deren Drehgeschwindigkeit und Bremskraft gemessen und an den verbundenen Rechner übertragen werden.

2. Vorrichtung nach Anspruch 1, dadurch gekennzeichnet, daß die unabhängigen Räder in Flüssigkeitslagern (3) gelagert sind.

3. Vorrichtung nach Anspruch 1, dadurch gekennzeichnet, daß die Bremsung des einen Rades (2) durch eine Regeleinrichtung erfolgt, die die Steuerung des Bremsmomentes durch Foucaultschen Strom ermöglicht.

4. Verfahren zur Anwendung der Vorrichtung nach Anspruch 1, dadurch gekennzeichnet, daß die Ermittlung der Oberflächenbeschaffenheit anhand der Differentialmessung der Drehgeschwindigkeit der Räder (1 und 2) für ein vorgegebenes Bremsmoment erfolgt.

5. Verfahren nach Anspruch 4, dadurch gekennzeichnet, daß bei einem Durchrutschen des gebremsten Rades (2) und bei einer Differentialmessung der entsprechenden Geschwindigkeiten die Bremsung aufgehoben wird, so daß die beiden Räder (1 und 2) wieder auf die selbe Geschwindigkeit gebracht werden, die Bremsung danach fortschreitend wieder eingeleitet und erhöht wird, bis ein erneutes Durchrutschen erfolgt.

## Claims

1. An apparatus for checking the surface condition of materials composed essentially of an adherence measuring sensor, the sensitive element of which is placed in contact with the surface of the material, with movement relative to the latter, and of an associated calculator effecting the comparative measurement, the display and, possibly, the controlling of the surface production or treatment apparatus, characterized in that the sensitive element of the adherence measuring apparatus is composed of two independent wheels (1 and 2), the running treads have the same surface condition, one of which (1) is free and the other (2) is fitted with a progressively-acting brake, the rotational speed and the brake force of which are measured and transmitted to the associated calculator.

2. An apparatus according to claim 1, characterized in that the independent wheels are mounted on fluid bearings (3).

3. An apparatus according to claim 1, characterized in that the braking of one of the wheels (2) is obtained by adjustable means permitting controlling the torque by eddy current.

4. A method of operation of the apparatus according to claim 1, characterized in that the checking of the surface condition is effected on the basis of the differential measurement, of the rotational speed of the wheels (1 and 2), for a specific coupling torque.

5. A method according to claim 4, characterized in that at the time of the skidding of the braked wheel (2) and of the differential measurement of the corresponding speeds, the braking is cancelled so as to bring the two wheels (1 and 2) back to the same speed, and then progressively restored and increased until a new skidding is obtained.

# F I G.1

# F I G.2